# EUROPÄISCHE PATENTANMELDUNG

(11) **EP 1 079 112 A2**
(43) Veröffentlichungstag der Anmeldung: **28.02.2001**
(21) Anmeldenummer: 00109491.1
(22) Anmeldetag: 04.05.2000
(51) Int. Cl.: F04D 13/06, H02K 5/128

(54) **Elektromotorisch angetriebene Kreiselpumpe mit aussenliegendem Rotor**

(30) Priorität: 20.08.1999 DE 19939522
(71) Anmelder: WILO GmbH, D-44263 Dortmund (DE)
(72) Erfinder: Nowak, Dirk, 58455 Witten (DE); Stock, Bernd-Thorsten, 32699 Extertal (DE)
(74) Vertreter: COHAUSZ HANNIG DAWIDOWICZ & PARTNER

(57) **Zusammenfassung**

Die Erfindung betrifft eine Kreiselpumpe 1 mit einem die Pumpe 1 antreibenden Elektromotor 7 in Radialflußbauweise, dessen mit dem Pumpenlaufrad 5 drehfest verbundener Rotor 19 als Naßläufer in Kontakt mit dem geförderten Medium ist und dessen Stator 14 durch Abdichtungsmittel 15, 16, 17, 18 von dem geförderten Medium getrennt ist, wobei der Rotor 19 mehrere Magnete 22 und der Stator 14 mehrere Ständerwicklungen 13 aufweist und wobei die Magnete 22 des Rotors 19 radial außerhalb der Ständerwicklungen 13 des Stators 14 umlaufen.

## Beschreibung

Die vorliegende Erfindung betrifft eine Kreiselpumpe mit einem die Pumpe antreibenden Elektromotor in Radialflußbauweise, dessen mit dem Pumpenlaufrad drehfest verbundener Rotor als Naßläufer in Kontakt mit dem geförderten Medium ist und dessen Stator durch Abdichtungsmittel von dem geförderten Medium getrennt ist, wobei der Rotor mehrere Magnete und der Stator mehrere Ständerwicklungen aufweist.

Derartige Pumpen sind als Spalttopfpumpe beispielsweise aus der DE-OS 44 38 132 bekannt. Spalttopfpumpen oder Spaltrohrpumpen werden in Naßläuferbauweise vor allem an Heizungs- und Brauchwasseranlagen, sowie im Bereich der Kältetechnik oder in Kraftfahrzeugen eingesetzt. Zunehmend werden derartige Pumpen auch mit bürstenlosen Gleichstrommotoren angetrieben, die nach dem Verlauf der magnetischen Kraftlinien in Radialflußmotoren und Axialflußmotoren unterschieden werden. Bei den bekannten bürstenlosen Radialflußmotoren liegen die Ständerwicklungen des Stators radial außerhalb der Magnete des Rotors.

Im Zuge der Dezentralisierung der Pumpleistung an modernen Heizungsanlagen sowie durch die Forderung nach möglichst kleinen und leichten Pumpen im Kraftfahrzeugbereich müssen nicht nur die Pumpen, sondern auch die Antriebsmotoren zunehmend kleinerbauend ausgeführt werden. Dieser Trend der Miniaturisierung stößt beim Antriebsmotor jedoch auf fertigungstechnische Probleme oder Grenzen. Bei den bekannten Spaltrohrmotoren sind die Wicklungen des Stators zumeist auf einem Wicklungsträger angeordnet, der über den Spalttopf geschoben ist. Ein Elektromotor mit einem derartigen Wicklungsträger ist beispielsweise aus der DE-OS 197 05 974 bekannt. Damit der Wirkungsgrad insbesondere im kleinen und mittleren Leistungsbereich durch den Wicklungsträger nicht verschlechtert wird, ist es bekannt, die einzelnen Ständerwicklungen in radialer Richtung von innen in den Wicklungsträger hinein zu wickeln. Diese Fertigungstechnik ist jedoch nur bis zu einer bestimmten Mindestbaugröße mit einem vertretbaren Arbeits- und Kostenaufwand durchführbar. Insbesondere bei hohen Stückzahlen ist dieses Herstellungsverfahren bei kleineren Baugrößen nicht anwendbar.

Aufgabe der Erfindung ist es daher, eine Kreiselpumpe der eingangs genannten Art zu schaffen, die bei einfacher Konstruktion auch bei kleiner Baugröße mit geringem fertigungstechnischen Aufwand preiswert herzustellen ist.

Diese Aufgabe wird erfindungsgemäß durch eine Kreiselpumpe nach Anspruch 1 gelöst. Wesentlich ist dabei, daß die Magnete des Rotors radial außerhalb der Ständerwicklung des Stators umlaufen.

Auf diese Weise können die Ständerwicklungen des Stators auch bei sehr kleinen Baugrößen mit geringem fertigungstechnischen Aufwand angeordnet werden. Insbesondere ist ein Bewickeln eines Wicklungsträgers von außen möglich, ohne daß hierdurch der Wirkungsgrad des Motors verringert wird. Bei einfacher Konstruktion wird somit eine Kreiselpumpe geschaffen, die auch bei kleinen Baugrößen in großer Stückzahl preiswert herzustellen und zu montieren ist.

Außerdem können auf diese Weise bei konstanter Baugröße des Elektromotors größere Drehmomente übertragen werden, da der Spalt zwischen Stator und Rotor und somit der Angriffspunkt der magnetischen Kräfte sich auf einem größeren Umfang befindet.

Auch ergibt sich durch den außerhalb des Stators umlaufenden Rotor ein höheres Massenträgheitsmoment, so daß ein besonders gleichmäßiger und vibrationsfreier Motorlauf erreichbar ist.

Eine besonders einfache Konstruktion kann dadurch erreicht werden, daß der Rotor eine Hülse aufweist, die die Ständerwicklungen des Stators außen übergreift und an der die Magnete des Rotors befestigt sind. Dabei ist es für einen besonders guten Wirkungsgrad des Motors vorteilhaft, wenn die Magnete an der Innenseite der Hülse angeordnet sind.

Auch kann der Rotor dabei auf besonders einfache Weise gelagert werden, indem die Hülse über ein oder mehrere Radiallager in dem Motorgehäuse oder auf den Abdichtungsmitteln des Stators gelagert ist.

In einer bevorzugten Ausführungsform sind die Ständerwicklungen des Stators von außen auf einen Statorhalter aufgebracht. Insbesondere können die Ständerwicklungen dabei auf radiale Stege oder in radiale Ausnehmungen des Statorhalters gewickelt sein.

Die Abdichungsmittel des Stators können auf besonders einfache Weise durch eine Umhüllung des Stators mit Kunststoff gebildet sein. Auch ist es möglich, als Abdichtungsmittel des Stators einen Spalttopf anzuordnen, dessen Topfwand zwischen dem außenliegenden Rotor und dem innenliegenden Stator hindurchgeführt ist. Auch können die Abdichtungsmittel des Stators Hülsen, Vergußmassen und/oder Dichtungen umfassen.

In einer weiteren bevorzugten Ausführungsform der Erfindung ist das Pumpenlaufrad drehfest mit einer Motorwelle verbunden, die über mindestens ein Radiallager in einem Lagerschild des Motorgehäuses gelagert ist. Dabei kann der Lagerschild vorzugsweise auch als Statorhalter für die Ständerwicklungen des Stators dienen.

Besonders vorteilhaft ist es dabei, wenn die Motorwelle einen koaxialen Kanal aufweist, durch den das geförderte Medium von der Pumpenkammer, insbesondere vom Zentrum des Pumpenlaufrades bis zu dem der Pumpenkammer abgewandten Ende der Motorwelle fließen kann. Der Lagerschild ist dabei gegenüber dem Motorgehäuse dicht abgeschlossen, so daß das geförderte Medium innerhalb des Lagerschildes zu den Radiallagern der Motorwelle fließen kann.

In einer weiteren bevorzugten Ausführungsform der Erfindung umfaßt der Rotor eine mit dem Pumpenlaufrad verbundene Scheibe, die an der dem Pumpenlaufrand abgewandten Seite über einen ersten Dichtspalt an einem Bund und an einem mit dem geförderten Medium gefüllten Ringraum anliegt, wobei der Ringraum einerseits über den ersten Dichtspalt und mindestens einen in der Scheibe angeordneten Kanal mit einem Bereich niedrigen Drucks des Pumpenlaufrades oder der Pumpenkammer verbunden ist und der Ringraum andererseits über einen in Umfangsrichtung hülsenförmig verlaufenden zweiten Dichtspalt mit einem Bereich hohen Drucks des Pumpenlaufrades oder der Pumpenkammer verbunden ist. Auf diese Weise wird an dem ersten Dichtspalt, der vorzugsweise in einer radialen Ebene verläuft, eine hydraulische Regelung der axialen Position der Scheibe und somit auch des Pumpenlaufrades sowie des Rotors erreicht. Sobald die Scheibe sich axial in Richtung der Pumpenkammer verschiebt, vergrößert sich der erste Dichtspalt. Das dabei durch den Kanal in den ersten Dichtspalt und in den Ringraum auf der der Pumpenkammer abgewandte Seite der Scheibe mit geringem Druck eintretende Medium bewirkt eine Rückstellung der Scheibe und des Pumpenlaufrades in axialer Richtung. Wenn die Scheibe sich axial von der Pumpenkammer weg verschiebt, verringert sich die Dicke des ersten Dichtspaltes. Da die Dicke des zweiten Dichtspaltes bei axialen Verschiebungen der Scheibe und der damit verbundenen Pumpen- und Rotorteile konstant bleibt, liegt auf der der Pumpenkammer abgewandten Seite der Scheibe nunmehr verstärkt Medium mit hohem Druck an, so daß die Scheibe in axialer Richtung zurückgedrückt wird. Auf diese Weise kann auf ein separates Axiallager verzichtet werden. Somit wird ein aufgrund der an Kreiselpumpen auftretenden hohen Axialkräfte stark belastetes Verschleißteil eingespart.

Besonders günstig ist es dabei, wenn der in Form eines Hohlzylinders angeordnete zweite Dichtspalt zwischen dem Stator und dem Rotor vorgesehen ist. Eine besonders einfache Konstruktion kann außerdem auch dadurch erreicht werden, daß der erste Dichtspalt in einer zur Laufachse senkrechten Ebene zwischen der Scheibe und einer Stirnseite eines Radiallagers der Motorwelle vorgesehen ist.

Für eine besonders exakte hydraulische Regelung wird vorgeschlagen, daß der erste und/oder der zweite Dichtspalt eine Dicke von 0,1 bis 1 mm, vorzugsweise von 0,3 bis 0,5 mm aufweisen. Hierdurch ist eine hydraulische Regelung der axialen Position der Scheibe und somit insbesondere auch des Pumpenlaufrades und des Rotors im Hundertstel-Millimeter-Bereich möglich.

In einer weiteren bevorzugten Ausführungsform weist der Stator neun Ständerwicklungen auf, die radial innerhalb der Magnete des Rotors gleichmäßig über den Umfang verteilt sind. Hierdurch werden mit störenden Geräuschen verbundene Rastmomente vermieden, so daß ein besonders leiser Motorbetrieb möglich ist.

Weitere Vorteile und Merkmale der Erfindung ergeben sich aus den Unteransprüchen sowie aus der nachfolgenden Beschreibung und den in den Zeichnungen dargestellten Ausführungsbeispielen.

Es zeigen:
- Figur 1:: Querschnitt durch eine erfindungsgemäße Kreiselpumpe mit Elektromotor und Motorelektronik

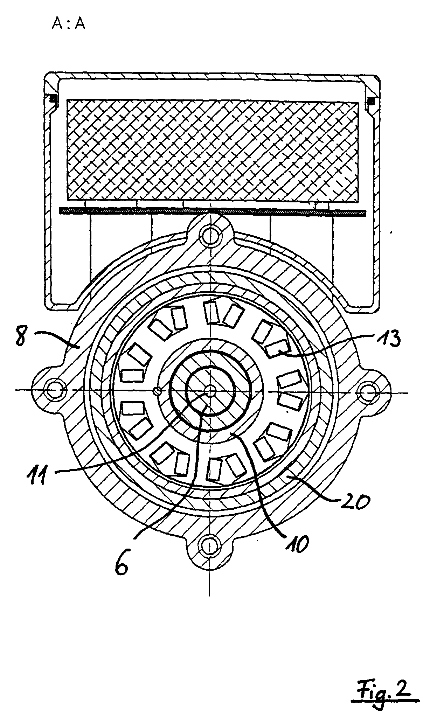

- Figur 2:: Schnittansicht entlang der Schnittlinie A-A aus Figur 1 und
- Figur 3:: Querschnitt durch eine alternative Ausführungsform

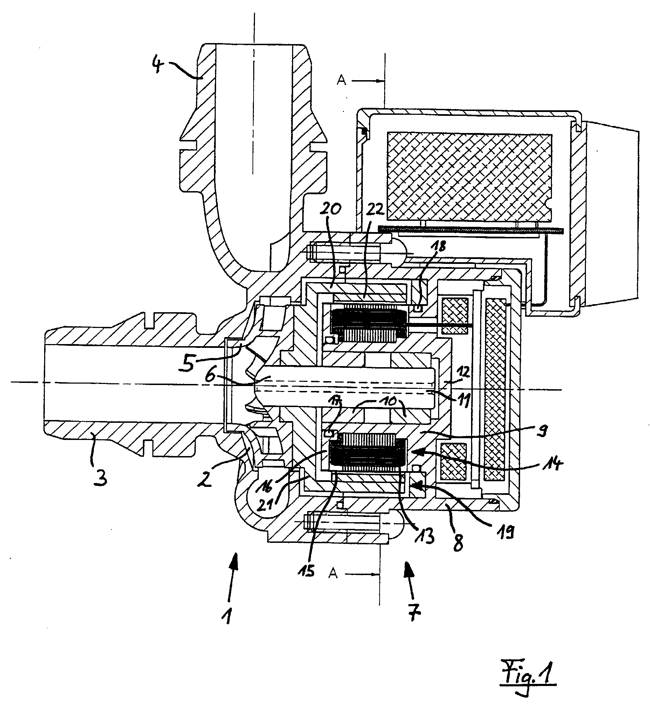

Die in Figur 1 gezeigte Kreiselpumpe 1 hat eine Pumpenkammer 2 mit einem koaxialen Ansaugstutzen 3 und einem tangentialen und/oder radialen Druckstutzen 4. Das Pumpenlaufrad 5 sitzt auf dem Ende der Motorwelle 6 des die Pumpe 1 antreibenden Elektromotors 7. Im Inneren des Elektromotors 7 ist ein einstückig mit dem Motorgehäuse 8 ausgebilderter Lagerschild 9 angeordnet, in dem die Motorwelle 6 über zwei Radialgleitlager 10 gelagert ist. Zusätzlich ist ein in Figur 1 nicht näher dargestelltes Axialgleitlager vorgesehen. Die Motorwelle 6 weist einen koaxialen Kanal 11 auf, durch den das geförderte Medium vom Zentrum des Pumpenlaufrades 5 bis zu dem Boden 12 des Lagerschildes 9 und von hier zu den Radiallagern 10 gelangen kann.

Auf der Außenseite des Lagerschildes 9 befinden sich die Ständerwicklungen 13 des Stators 14. Insgesamt sind 9 Ständerwicklungen 13 gleichmäßig über den Umfang des Stators 14 verteilt. Nach außen ist der Stator 14 durch eine dünne Kunststoffummantelung 15 von dem geförderten Medium abgedichtet. An das der Pumpenkammer 2 zugewandte Ende der Kunststoffummantelung 15 ist ein sich nach innen bis auf den Lagerschild 9 erstreckender Deckel 16 angeformt, der über einen Dichtring 17 gegen die Außenseite des Lagerschildes 9 abgedichtet ist. An dem der Pumpenkammer 2 abgewandten Ende ist die Kunststoffummantelung über einen zweiten Dichtring 18 gegen den Lagerschild 9 abgedichtet.

Radial außerhalb des Stators 14 läuft der Rotor 19 um. Der Rotor 19 umfaßt eine Hülse 20, die an den äußeren Rand einer an dem Pumpenlaufrad 5 befestigten Scheibe 21 angeformt ist. An der Innenseite der Hülse 20 sind mehrere Permanentmagnete 22 befestigt, die radial außerhalb der Ständerwicklungen 13 umlaufen. Die den Antrieb des Elektromotors 7 hervorrufenden Magnetflußlinien verlaufen dabei in radialer Richtung.

Der zwischen der Kunststoffummantelung 15 und der Innenseite des Motorgehäuses 8 sowie der zwischen der Scheibe 21 und dem Deckel 16 liegende Bereich ist mit der Pumpenkammer 2 verbunden und mit dem geförderten Medium gefüllt. Der Rotor 19 dreht sich als Naßläufer im geförderten Medium.

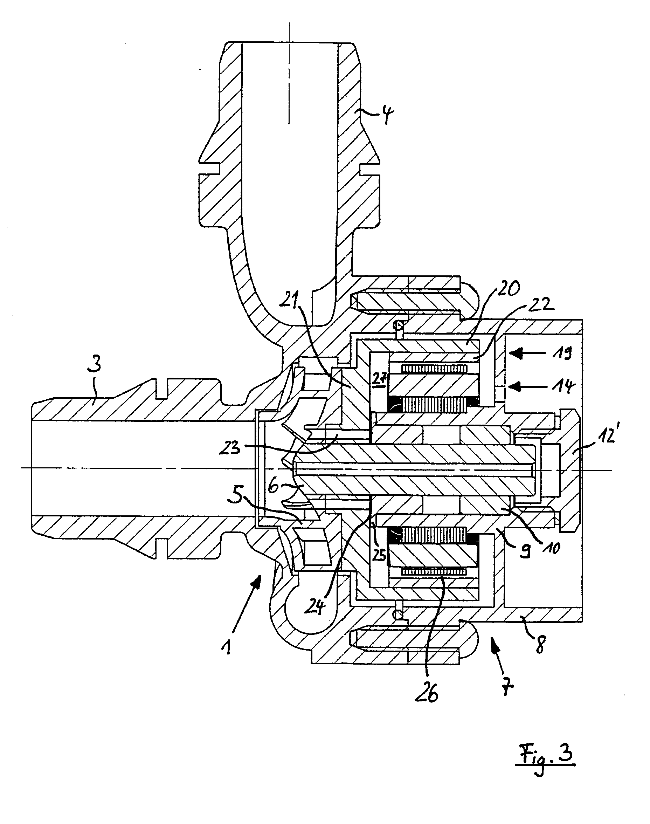

Die in Figur 3 gezeigte Variante unterscheidet sich von der Ausführungsform gemäß Figur 1 dadurch, daß die axiale Lage des Rotors 19 und des Laufrades 5 hydraulisch geregelt werden. Dazu sind in dem der Motorwelle 6 benachbarten Bereich des Laufrades 5 und der Scheibe 21 mehrere Ausgleichskanäle 23 vorgesehen, die in einem radialen ersten Dichtspalt 24 münden. Der Dichtspalt 24 ist zwischen dem inneren Bereich der Scheibe 21 und einem Anlagebund 25 des benachbarten Radiallagers 10 ausgebildet. Ein hülsenförmiger zweiter Dichtspalt 26 befindet sich zwischen der Außenseite des Stators 14 und der Innenseite des Rotors 19. Während sich bei einer axialen Verschiebung des Pumpenlaufrades 5 bzw. der Scheibe 21 die Dicke des ersten Dichtspaltes 24 ändert, bleibt die Dicke des zweiten Dichtspaltes 26 hierbei konstant. Der zwischen den beiden Dichtspalten 24 und 26 an der im Laufrad 5 abgewandten Seite der Scheibe 21 ausgebildete Ringraum 27 ist über den ersten Dichtspalt 24 und die Ausgleichskanäle 23 mit dem inneren Bereich des Laufrades 5 und somit mit dem Niederdruckbereich des geförderten Mediums verbunden. Über den zweiten Dichtspalt 26 und den die Hülse 20 umgebenden Bereich ist der Ringraum 27 mit dem radial außenliegenden Bereich der Pumpenkammer 2 und somit mit dem Hochdruckbereich des geförderten Mediums verbunden.

Wenn das Pumpenlaufrad 5 und somit die Scheibe 21 in der in Figur 3 gezeichneten Darstellung nach links auswandert, vergrößert sich die Dicke des ersten Dichtspaltes 24 und der Druck des im Ringraums 27 befindlichen Mediums fällt ab. Dadurch wird die Scheibe 21 unter dem Einfluß der auf die der Pumpenkammer 2 zugewandten Seite wirkenden hohen Druckkräfte zurück nach rechts geschoben. In entsprechender Weise steigt der Druck des Mediums im Ringraum 27 bei einer axialen Verschiebung der Scheibe 21 nach rechts an, wobei die Dicke des ersten Dichtspaltes 24 verringert wird. Der ansteigende Druck im Ringraum 27 bewirkt dabei, daß die Scheibe 21 zurück nach links gedrückt wird. Durch diese hydraulische Lageregelung kann auf ein separates Axiallager verzichtet und die axiale Position des Laufrades 5 sowie des Rotors 19 mit einer Toleranz im Hunderstel-Millimeter-Bereich eingestellt werden.

Ein weiterer Unterschied zwischen den beiden Ausführungsformen in Figur 1 und Figur 3 besteht darin, daß der Boden 12' des Lagerschildes 9 als separates Bauteil in den Lagerschild 9 eingesetzt, insbesondere eingeschraubt ist.

Gemäß einer weiteren in den Zeichnungen nicht dargestellten Ausführungsform ist es auch möglich, auf die Motorwelle 6 zu verzichten und die Hülse 20 durch entsprechend größer ausgebildete Radiallager von außen in dem Motorgehäuse 8 zu lagern.

## Patentansprüche

1. Kreiselpumpe mit einem die Pumpe antreibenden Elektromotor in Radialflußbauweise, dessen mit dem Pumpenlaufrad drehfest verbundener Rotor als Naßläufer in Kontakt mit dem geförderten Medium ist und dessen Stator durch Abdichtungsmittel von dem geförderten Medium getrennt ist, wobei der Rotor mehrere Magnete und der Stator mehrere Ständerwicklungen aufweist,
**dadurch gekennzeichnet,**
daß die Magnete (22) des Rotors (19) radial außerhalb der Ständerwicklungen (13) des Stators (14) umlaufen.

2. Pumpe nach Anspruch 1, **dadurch gekennzeichnet,** daß der Rotor (19) eine Hülse (20) aufweist, die die Ständerwicklungen (13) des Stators (14) außen übergreift und an der die Magnete (22) des Rotors (19) befestigt sind.

3. Pumpe nach Anspruch 2, **dadurch gekennzeichnet,** daß die Hülse (20) über mindestens ein Radiallager in dem Motorgehäuse (8), insbesondere auf den Abdichtungsmitteln (15) des Stators (14), gelagert ist.

4. Pumpe nach einem der vorherigen Ansprüche, **dadurch gekennzeichnet,** daß die Ständerwicklungen (13) des Stators (14) von außen auf einen Statorhalter aufgebracht, insbesondere auf radiale Stege oder in radiale Ausnehmungen des Statorhalters gewickelt sind.

5. Pumpe nach einem der vorherigen Ansprüche, **dadurch gekennzeichnet,** daß der Stator (14) mit Kunststoff umhüllt ist.

6. Pumpe nach einem der vorherigen Ansprüche, **dadurch gekennzeichnet,** daß die Abdichtungsmittel des Stators (14) durch einen Spalttopf gebildet sind.

7. Pumpe nach einem der vorherigen Ansprüche, **dadurch gekennzeichnet,** daß die Abdichtungsmittel des Stators (14) eine Hülse (15), Vergußmasse (16) und/oder Dichtungen (17, 18) umfassen.

8. Pumpe nach einem der vorherigen Ansprüche, **dadurch gekennzeichnet,** daß das Pumpenlaufrad (5) drehfest mit einer Motorwelle (6) verbunden ist, die über mindestens ein Radiallager (10) in einem vorzugsweise auch den Stator (14) tragenden Lagerschild (9) des Motorgehäuses (8) gelagert ist.

9. Pumpe nach Anspruch 8, **dadurch gekennzeichnet,** daß die Motorwelle (6) einen koaxialen Kanal (11) aufweist, durch den das geförderte Medium von der Pumpenkammer (2) bis zu dem der Pumpenkammer (2) abgewandten Ende der Motorwelle (6) fließen kann.

10. Pumpe nach einem der vorherigen Ansprüche, **dadurch gekennzeichnet,** daß der Rotor (19) eine mit dem Pumpenlaufrad (5) verbundene Scheibe (21) umfaßt, die an der dem Pumpenlaufrad (5) abgewandten Seite über einen ersten Dichtspalt (24) an einem Bund (25) und an einem mit dem geförderten Medium gefüllten Ringraum (27) anliegt, wobei der Ringraum (27) einerseits über den ersten Dichtspalt (24) und mindestens einen in der Scheibe (21) angeordneten Kanal (23) mit einem Bereich niedrigen Drucks des Pumpenlaufrades (5) oder der Pumpenkammer (2) verbunden ist, und der Ringraum (27) andererseits über einen in Umfangsrichtung hülsenförmig verlaufenden zweiten Dichtspalt (26) mit einem Bereich hohen Drucks des Pumpenlaufrades (5) oder der Pumpenkammer (2) verbunden ist.

11. Pumpe nach Anspruch 10, **dadurch gekennzeichnet,** daß der zweite Dichtspalt (26) zwischen dem Stator (14) und dem Rotor (19) vorgesehen ist.

12. Pumpe nach Anspruch 10 oder 11, **dadurch gekennzeichnet,** daß der erste Dichtspalt (24) in einer zur Laufradachse senkrechten Ebene zwischen der Scheibe (21) und einer Stirnseite eines Radiallagers (10) vorgesehen ist.

13. Pumpe nach einem der Ansprüche 10 bis 12, **dadurch gekennzeichnet,** daß der erste (24) und/oder zweite (26) Dichtspalt eine Dicke von 0,1 bis 1 mm, vorzugsweise von 0,3 bis 0,5 mm aufweist.

14. Pumpe nach einem der vorherigen Ansprüche, **dadurch gekennzeichnet,** daß der Stator (14) neun Ständerwicklungen (13) aufweist, die radial innerhalb der Magnete (22) des Rotors (19) gleichmäßig über den Umfang verteilt sind.

15. Pumpe nach einem der vorherigen Ansprüche, **dadurch gekennzeichnet,** daß sie in einer Heizungsanlage, im Bereich der Kältetechnik oder in einem Kraftfahrzeug eingesetzt ist.
